# EUROPÄISCHE PATENTSCHRIFT

(11) **EP 3 831 110 B1**
(45) Veröffentlichungstag und Bekanntmachung des Hinweises auf die Patenterteilung: **25.12.2024**
(21) Anmeldenummer: 19753244.3
(22) Anmeldetag: 31.07.2019
(51) Int. Cl.: H04W 12/086, H04W 12/30, H04W 12/45

(54) **SICHERHEITSELEMENT, VERFAHREN ZUM BETREIBEN EINES SICHERHEITSELEMENTS UND VERFAHREN ZUM INSTALLIEREN EINES ALLGEMEINEN ANWENDUNGSPROGRAMMS**
SECURITY ELEMENT, METHOD FOR OPERATING A SECURITY ELEMENT AND METHOD FOR INSTALLING A GENERAL APPLICATION PROGRAM
ÉLÉMENT DE SÉCURITÉ, PROCÉDÉ DE FONCTIONNEMENT D'UN ÉLÉMENT DE SÉCURITÉ ET PROCÉDÉ D'INSTALLATION D'UN PROGRAMME D'APPLICATION GÉNÉRAL

(30) Priorität: 01.08.2018 DE 102018006055
(43) Veröffentlichungstag der Anmeldung: 09.06.2021
(73) Patentinhaber: Giesecke+Devrient Mobile Security Germany GmbH, 81677 München (DE)
(72) Erfinder: GARCIA FARRÉS, Andreu, 08192 Sant Quirze del Vallès (ES); AMOROS, Luis Miguel, 08820 El Prat de Llobregat (ES); LÓPEZ, Albert, 08210 Barberà del Vallès (ES); MISHRA, Santosh Kumar, Sus Gaon, 411021 Pune (IN)
(74) Vertreter: Giesecke+Devrient IP
(86) Internationale Anmeldenummer: PCT/EP2019/000235
(87) Internationale Veröffentlichungsnummer: WO 2020/025161

(56) Entgegenhaltungen:
- WO-A1-2016/091414
- DE-A1- 102015 000 688
- KR-B1- 101 803 084
- US-A1- 2017 338 954

## Beschreibung

Die Erfindung betrifft ein Sicherheitselement für ein mobiles Gerät. Das Sicherheitselement weist einen Hauptsicherheitsbereich, einen ersten Profilsicherheitsbereich, welcher eingerichtet ist ein erstes Profil aufzunehmen, und einen von dem ersten Profilsicherheitsbereich separaten zweiten Profilsicherheitsbereich, welcher eingerichtet ist ein zweites Profil aufzunehmen, auf. Der Hauptsicherheitsbereich ist dazu ausgebildet ist Verwaltungsfunktionen für die Profilsicherheitsbereiche durchzuführen. Die Erfindung betrifft auch ein Verfahren, bei welchem ein dementsprechendes Sicherheitselement betrieben wird. Die Erfindung betrifft ferner auch ein Verfahren zum Installieren eines Anwendungsprogramms.

Sicherheitselemente sind bekannt. Ein Sicherheitselement kann beispielsweise als eUICC (Embedded Universal Integrated Circuit Card) ausgebildet sein und beispielsweise in ein mobiles Gerät, wie beispielsweise ein Mobiltelefon, intergiert sein.

Durch die technische Spezifikation "Remote Provisioning Architecture for Embedded UICC" (Version 3.2, 27. Juni 2017) der GSMA (GSM Association) und der weiteren technischen Spezifikation "Secure Element Access Control" (Version 1.0.20, März 2014) der GlobalPlatform Inc. ist der übliche Aufbau und der übliche Betrieb einer eUICC bekannt.

Gemäß diesen Spezifikationen ist es üblich, dass die eUICC eine ISD-P1 mit einem ersten Profil und eine ISD-P2 mit einem zweiten Profil aufweist. Wird die eUICC beispielsweise mit dem ersten Profil als aktives Profil betrieben, so kann beispielsweise ein Anwendungsprogramm des ISD-P1 ausgeführt werden. Wird die eUICC hingegen beispielsweise mit dem zweiten Profil als aktives Profil betrieben, so kann beispielsweise ein Anwendungsprogramm des ISD-P2 ausgeführt werden.

Weiterhin ist es beim Betrieb der eUICC üblich, dass ein Anwendungsprogramm des ISD-P1 beendet wird, falls vom ersten Profil des ISD-P1 zum zweiten Profil des ISD-P2 gewechselt wird. Dadurch kann kein Anwendungsprogramm der eUICC weitergeführt werden.

Aus der KR 101803084 B1 ist ein Sicherheitselement bekannt, das eine übergeordnete zentrale Sicherheitsdomäne (ISD-R) sowie zwei oder mehr untergeordnete Profil-Sicherheitsdomänen (ISP-P) aufweist. In den untergeordneten Sicherheitsdomänen sind Profile für die Verbindung mit Netzen unterschiedlicher Mobilfunkbetreiber abgespeichert. Es kann immer nur eine Profil-Sicherheitsdomäne aktiv sein. Eine der untergeordneten gemeinsamen Sicherheitsdomänen ist als gemeinsame Sicherheitsdomäne (ISD-P Common) ausgeführt. Für die gemeinsame Sicherheitsdomäne gelten teilweise andere Zustandsregeln und Zugriffsbedingungen als für die Profil-Sicherheitsdomänen. Die gemeinsame Sicherheitsdomäne ist immer aktiv und sie kann nicht gelöscht werden. In die gemeinsame Sicherheitsdomäne sind Anwendungen installiert, z.B. eine Finanzanwendung, die von den Profilen genutzt werden kann. Durch die abweichenden Zustandsregeln und Zugriffsbedingungen ist die Kompatibilität mit den einschlägigen Standards nicht ohne weiteres gewährleistet.

Es ist Aufgabe der Erfindung ein Sicherheitselement, ein Verfahren zum Betrieb eines Sicherheitselements und ein Verfahren zum Installieren eines Anwendungsprogramms zu schaffen, bei welchem bzw. mit welchem ein Anwendungsprogramm auch bei einem Profilwechsel weitergeführt werden kann.

Die Aufgabe wird durch ein Sicherheitselement gemäß den unabhängigen Ansprüchen gelöst.

Ein erfindungsgemäßes Sicherheitselement ist für ein mobiles Gerät geeignet. Das Sicherheitselement weist einen Hauptsicherheitsbereich, einen ersten Profilsicherheitsbereich, welcher eingerichtet ist ein erstes Profil aufzunehmen, und einen von dem ersten Profilsicherheitsbereich separaten zweiten Profilsicherheitsbereich, welcher eingerichtet ist ein zweites Profil aufzunehmen, auf. Der Hauptsicherheitsbereich ist, insbesondere nur, dazu ausgebildet, Verwaltungsfunktionen für die Profilsicherheitsbereiche durchzuführen. Als ein wichtiger Gedanke der Erfindung ist es vorgesehen, dass das Sicherheitselement einen zur Aufnahme eines allgemeinen Anwendungsprogramms eingerichteten Allgemeinsicherheitsbereich aufweist, welcher separat zu den Profilsicherheitsbereichen ausgebildet ist und aktiv ist, wenn der erste Profilsicherheitsbereich aktiv ist und auch wenn, insbesondere anstatt des ersten Profilsicherheitsbereichs, der zweite Profilsicherheitsbereich aktiv ist.

Der Erfindung liegt die Erkenntnis zu Grunde, dass es sinnvoll ist ein Anwendungsprogramm auch bei einem Profilwechsel, insbesondere vom ersten Profil zum zweiten Profil, weiter auszuführen. Das wird durch Schaffen des Allgemeinsicherheitsbereichs erreicht. Der Allgemeinsicherheitsbereich ist gleichzeitig aktiv bzw. in einem aktiven Zustand mit dem ersten Profil bzw. dem ersten Profilsicherheitsbereich aber auch gleichzeitig aktiv mit dem zweiten Profil bzw. dem zweiten Profilsicherheitsbereich. Deshalb kann das allgemeine Anwendungsprogramm auch unterbrechungsfrei ausgeführt werden, wenn ein Profilwechsel durchgeführt wird, d.h. vom ersten Profil zum zweiten Profil, oder vom zweiten Profil zum ersten Profil gewechselt wird.

Insbesondere ist der erste Profilsicherheitsbereich aktiv, wenn das erste Profil aktiv ist, und der zweite Profilsicherheitsbereich ist aktiv, wenn das zweite Profil aktiv ist.

Insbesondere sind die Profilsicherheitsbereiche derart eingerichtet, dass immer nur ein einziger Profilbereich aktiv sein kann. Bei dem Profilwechsel vom ersten Profil zum zweiten Profil, wird deshalb das erste Profil deaktiviert und das zweite Profil aktiviert. Vorteilhaft ist nun, dass das allgemeine Anwendungsprogramm durch den Allgemeinsicherheitsbereich trotz Profilwechsel weiter ausgeführt werden kann.

Das Sicherheitselement kann auch mehr als zwei Profilsicherheitsbereiche aufweisen.

Insbesondere ist der Allgemeinsicherheitsbereich profilunabhängig. Weiterhin insbesondere ist der Allgemeinsicherheitsbereich profilfrei ausgebildet, d.h. der Allgemeinsicherheitsbereich weist kein Profil auf. Der Allgemeinsicherheitsbereich ist also insbesondere nicht als Notprofilbereich ausgebildet, welcher genutzt werden kann, falls keiner der Profilsicherheitsbereiche zur Verfügung steht.

Das Sicherheitselement ist insbesondere als eUICC (Embedded Universal Integrated Circuit Card) ausgebildet. Das mobile Gerät ist insbesondere als mobiles Endgerät, vorzugsweise als Smartphone oder Internet-der-Dinge-Gerät ausgebildet.

Das jeweilige Profil ist insbesondere ausgebildet als Kombination einer Dateistruktur, Daten und Anwendungen, die auf dem Sicherheitselement bereitgestellt werden oder auf diesem vorhanden sein sollen und die, wenn aktiviert, den Zugriff auf eine bestimmte Mobilfunknetzinfrastruktur ermöglichen.

Vorzugsweise ist es vorgesehen, dass der Allgemeinsicherheitsbereich das allgemeine Anwendungsprogramm aufweist, und das allgemeine Anwendungsprogramm weiterhin aktiv ist, falls ein Profilwechsel durchgeführt wird. Vorteilhaft ist dies, da eine Aufgabe, welche durch das allgemeine Anwendungsprogramm vor dem Profilwechsel durchgeführt wurde, insbesondere unterbrechungsfrei, nach dem Profilwechsel weiter ausgeführt werden kann. Ein Neustart des allgemeinen Anwendungsprogramms kann dadurch verhindert werden.

Weiterhin vorzugsweise ist es vorgesehen, dass das allgemeine Anwendungsprogramm als kontaktloser Registrierungsdienst ausgebildet ist. Der kontaktlose Registrierungsdienst (CRS - contactless registry service) kann schneller und zuverlässiger Arbeiten, falls er unterbrechungsfrei ausgeführt wird. Abhängig von dem kontaktlosen Registrierungsdienst kann beispielsweise eine Zahlungstransaktion durchgeführt werden. Diese Zahlungstransaktion kann nun auch während einem Profilwechsel durchgeführt werden. Erfindungsgemäß ist vorgesehen, dass der Allgemeinsicherheitsbereich vom Hauptsicherheitsbereich umfasst ist. Vorteilhaft ist, dass kein weiterer, separater Bereich zu schaffen ist, um das allgemeine Anwendungsproramm auszuführen. Das allgemeine Anwendungsprogramm kann dann im Hauptsicherheitsbereich ausgeführt werden.

Weiterhin vorzugsweise ist es vorgesehen, dass das Sicherheitselement eine Hauptkontrollinstanz, welche eine jeweilige Zugangsinformation für die Profilsicherheitsbereiche aufweist, und eine Allgemeinkontrollinstanz, welche Zugangsinformation für den Allgemeinsicherheitsbereich aufweist, aufweist. Die Hauptkontrollinstanz ist insbesondere als ECASD (eUICC Controlling Authority Security Domain) ausgebildet. Weiterhin ist die Hauptkontrollinstanz insbesondere für die sichere Speicherung von Anmeldeinformationen verantwortlich, die zur Unterstützung der erforderlichen Sicherheitsbereiche bzw. Sicherheitsdomänen des Sicherheitselements erforderlich sind. Die Allgemeinkontrollinstanz kann beispielsweise als CASD (Controlling Authority Security Domain) bezeichnet werden. Die Allgemeinkontrollinstanz ist insbesondere für die sichere Speicherung von Anmeldeinformationen verantwortlich, die zur Unterstützung des Allgemeinsicherheitsbereichs erforderlich sind.

Weiterhin vorzugsweise ist es vorgesehen, dass die Allgemeinkontrollinstanz separat zur Hauptkontrollinstanz des Sicherheitselements ausgebildet ist. Durch die separate Ausbildung der Allgemeinkontrollinstanz ist das Sicherheitselement sicherer ausgebildet. Die Anmeldeinformationen für den Allgemeinsicherheitsbereich können nun unabhängig von den Anmeldeinformationen der übrigen Sicherheitsbereiche, insbesondere der Profilsicherheitsbereiche, gespeichert und angepasst werden.

Alternativ kann es aber auch vorgesehen sein, dass die Allgemeinkontrollinstanz von der Hauptkontrollinstanz des Sicherheitselements umfasst ist. Vorteilhaft dabei ist, dass die Hauptkontrollinstanz von der Allgemeinkontrollinstanz zumindest teilweise mitgenutzt werden kann.

Weiterhin vorzugsweise ist es vorgesehen, dass das Sicherheitselement einen Zugriffsregel-Anwendungsmaster, welcher eine Schnittstelle zum Austausch von Zugriffsregeln für zumindest ein weiteres Anwendungsprogramm des Sicherheitselements mit dem mobilen Gerät aufweist, und der Zugriffsregel-Anwendungsmaster im Allgemeinsicherheitsbereich angeordnet ist. Der Zugriffsregel-Anwendungsmaster ist insbesondere als ARA-M (Access Rule Application Master) ausgebildet. Insbesondere weist das Sicherheitselement nur einen einzigen Zugriffsregel-Anwendungsmaster auf. Ein Kartenherausgeber bzw. Sicherheitselementherausgeber definiert Zugriffskontrollregeln für die Anwendungen des Sicherheitselements und liefert diese Regeln an den Zugriffsregel-Anwendungsmaster (ARA-M). Insbesondere ist der Zugriffsregel-Anwendungsmaster dafür verantwortlich, alle verfügbaren Zugriffsregeln nach einer Anfrage von einem Zugriffssteuerungs-Vollstrecker auf dem mobilen Gerät abzurufen. Durch die Anordnung des Zugriffsregel-Anwendungsmasters im Allgemeinsicherheitsbereich wird ermöglicht, dass der Zugriffsregel-Anwendungsmaster für alle Profilsicherheitsbereiche und den Allgemeinsicherheitsbereich zur Verfügung steht. Zudem liegt der Zugriffsregel-Anwendungsmasters aber nur ein einziges Mal im aktiven Zustand im Sicherheitselement vor.

Weiterhin vorzugsweise ist es vorgesehen, dass das Sicherheitselement einen außerhalb der Profilsicherheitsbereiche ausgebildeten Zugriffsregeldateibereich aufweist, und zumindest eine Zugriffsregel für ein Profilanwendungsprogramm eines der Profilsicherheitsbereiche in dem Zugriffsregeldateibereich angeordnet ist. Der Zugriffsregeldateibereich ist insbesondere als PKCS#15-Dateistruktur (PKCS - Public Key Cryptographic Standards) ausgebildet und weist insbesondere Zugriffsregeldateien (ARF - Access Rule Files) auf. Durch die Ablage der zumindest einen Zugriffsregel im Zugriffsregeldateibereich kann der Profilsicherheitsbereich auch zugriffsregel-anwendungsclientfrei, d.h. ohne einen Zugriffsregel-Anwendungsclient (ARA-C - Access Rule Application Client) ausgebildet sein. Die benötigte Zugriffsregel kann dem Profilsicherheitsbereich nun durch den Zugriffsregeldateibereich bereitgestellt werden.

Weiterhin vorzugsweise ist es vorgesehen, dass die Zugriffsregel des Profilanwendungsprogramms des jeweiligen Profilsicherheitsbereichs im Zugriffsregeldateibereich angeordnet ist, falls der jeweilige Profilsicherheitsbereich zugriffsregel-anwendungsclientfrei ausgebildet ist. Die Anordnung der Zugriffregel im Zugriffsregeldateibereich ist vorzugweise vorgesehen, falls der jeweilige Profilsicherheitsbereich zugriffsregel-anwendungsclientfrei ausgebildet ist, d.h. der jeweilige Profilsicherheitsbereich keinen Zugriffsregel-Anwendungsclient aufweist.

Die Erfindung betrifft auch ein Verfahren zum Betreiben eines Sicherheitselements, bei welchem folgende Schritte durchgeführt werden:
- Betreiben des Sicherheitselements mit einem ersten Profil des Sicherheitselements;
- Ausführen eines allgemeinen Anwendungsprogramms des Sicherheitselements, insbesondere in einem Allgemeinsicherheitsbereich des Sicherheitselements, während das Sicherheitselement mit dem ersten Profil des Sicherheitselements betrieben wird;
- Wechseln vom ersten Profil zu einem zweiten Profil des Sicherheitselements, insbesondere durch Aktivieren des zweiten Profils und Deaktivieren des ersten Profils; und
- Betreiben des Sicherheitselements mit dem zweiten Profil während das allgemeine Anwendungsprogramm, insbesondere durchgehend, ausgeführt wird.

Durchgehend ausgeführt bedeutet insbesondere, dass das allgemeine Anwendungsprogramm ununterbrochen bzw. unterbrechungsfrei ausgeführt wird.

Das allgemeine Anwendungsprogramm wird in einem Allgemeinsicherheitsbereich, welcher vom Hauptsicherheitsbereich des Sicherheitselements umfasst ist, ausgeführt.

Weiterhin vorzugsweise ist es vorgesehen, dass das allgemeine Anwendungsprogramm abhängig von einer Zugangsinformation für den Allgemeinsicherheitsbereich ausgeführt wird und die Zugangsinformation durch eine, insbesondere von einer Hauptkontrollinstanz des Sicherheitselements unterschiedlichen, Allgemeinkontrollinstanz des Sicherheitselements bereitgestellt wird.

Weiterhin vorzugsweise ist es vorgesehen, dass das allgemeine Anwendungsprogramm abhängig von zumindest einer Zugriffsregel ausgeführt wird und die Zugriffsregel durch einen Zugriffsregel-Anwendungsmaster, welcher im Allgemeinsicherheitsbereich angeordnet ist und eine Schnittstelle zum Austausch von zumindest einem weiteren Anwendungsprogramm des Sicherheitselements mit einem das Sicherheitselement umfassende mobilen Gerät aufweist, bereitgestellt wird.

Weiterhin vorzugsweise ist es vorgesehen, dass der erste Profilsicherheitsbereich das erste Profil aufweist und der zweite Profilsicherheitsbereich das zweite Profil aufweist. Beispielsweise weist der jeweilige Profilsicherheitsbereich das dementsprechende Profil dann auf, nachdem dieses durch einen Profilanbieter installiert wurde.

Die Erfindung betrifft auch ein Verfahren zum Installieren eines allgemeinen Anwendungsprogramms, bei welchem folgende Schritte durchgeführt werden:
- Bereitstellen des allgemeinen Anwendungsprogramms durch eine Verteileinrichtung;
- Insbesondere Anfordern des allgemeinen Anwendungsprogramms von der Verteileinrichtung durch ein Sicherheitselement;
- Verteilen des allgemeinen Anwendungsprogramms an das Sicherheitselement; und
- Installieren des allgemeinen Anwendungsprogramms in einem Allgemeinsicherheitsbereich des Sicherheitselements.

Die Verteileinrichtung ist insbesondere als zentrale oder verteilte Servereinrichtung ausgebildet. Durch das Verteilen wird das allgemeine Anwendungsprogramm insbesondere zumindest abschnittsweise drahtlos von der Verteileinrichtung zu dem Sicherheitselement bzw. zu einem mobilen Gerät mit dem Sicherheitselement übertragen.

Die mit Bezug auf das jeweilige erfindungsgemäße Verfahren vorgestellten bevorzugten Ausführungsformen und deren Vorteile gelten entsprechend für das erfindungsgemäße Sicherheitselement. Die gegenständlichen Komponenten des erfindungsgemäßen Sicherheitselements sind jeweils dazu ausgebildet, die jeweiligen Schritte des jeweiligen Verfahrens auszuführen.

Weitere Merkmale der Erfindung ergeben sich aus den Ansprüchen, den Figuren und der Figurenbeschreibung.

Ausführungsbeispiele der Erfindung werden nachfolgend anhand einer schematischen Zeichnung näher erläutert.

Dabei zeigen:
- Fig. 1: eine schematische Darstellung eines Ausführungsbeispiels eines erfindungsgemäßen Sicherheitselements mit einem Allgemeinsicherheitsbereich; und
- Fig. 2: eine schematische Darstellung eines weiteren Ausführungsbeispiels des Sicherheitselements mit einem Zugriffsregel-Anwendungsmaster im Allgemeinsicherheitsbereich.

In der Figur werden gleiche oder funktionsgleiche Elemente mit den gleichen Bezugszeichen versehen.

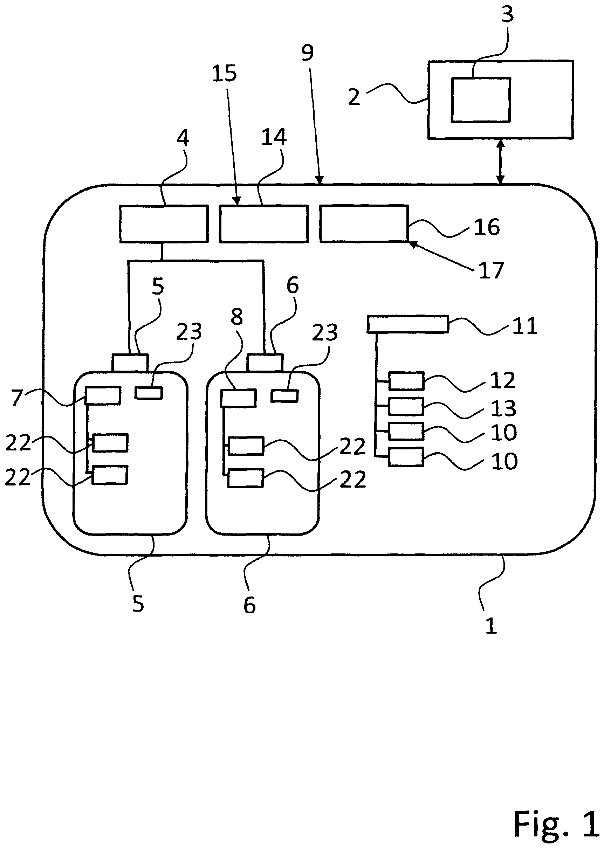

Fig. 1 zeigt in schematischer Darstellung ein Sicherheitselement 1. Das Sicherheitselement 1 ist gemäß dem Ausführungsbeispiel als eUICC (Embedded Universal Integrated Circuit Card) ausgebildet.

Weiterhin zeigt Fig. 1 ein mobiles Gerät 2 mit einem Zugriffssteuerungs-Vollstrecker 3. Das mobiles Gerät 2 ist gemäß dem Ausführungsbeispiel als mobiles Endgerät, insbesondere als Smartphone, ausgebildet. Das mobile Gerät 2 kann aber auch als Internet-der-Dinge (loT -Internet of Things) Gerät ausgebildet sein. Der Zugriffssteuerungs- Vollstrecker 3 ruft die Zugriffsregeln vom Sicherheitselements 1 ab und wendet diese Regeln an, um einen Zugriff einer Geräteanwendung des Geräts 2 auf verschiedene Anwendungen des Sicherheitselements 1 einzuschränken.

Das Sicherheitselement 1 weist einen Hauptsicherheitsbereich 4, einen ersten Profilsicherheitsbereich 5 und einen zweiten Profilsicherheitsbereich 6 auf.

Der Hauptsicherheitsbereich 4 ist gemäß dem Ausführungsbeispiel als ISD-R (Issuer Security Domain Root) ausgebildet. Der Hauptsicherheitsbereich 4 ist insbesondere verantwortlich für die Erstellung eines neuen Profilsicherheitsbereichs und für eine Lebenszyklusverwaltung aller Profilsicherheitsbereich des Sicherheitselements 1. Insbesondere soll es nur einen Hauptsicherheitsbereich 4 auf dem Sicherheitselement 1 geben. Der Hauptsicherheitsbereich 4 wird insbesondere während der Sicherheitselement-Fertigung vom Hersteller des Sicherheitselements 1 installiert und personalisiert. Der Hauptsicherheitsbereich 4 ist insbesondere mit sich selbst assoziiert. Insbesondere kann der Hauptsicherheitsbereich 4 nicht gelöscht oder deaktiviert werden.

Die Profilsicherheitsbereiche 5, 6 sind gemäß dem Ausführungsbeispiel als ISD-P (Issuer Security Domain Profile ausgebildet). Der jeweilige Profilsicherheitsreich 5, 6 wird insbesondere für einen Profil-Download und die Installation in Zusammenarbeit mit dem Profil-Paket-Interpreter für die Decodierung oder Interpretation eines empfangenen Profil-Pakets verwendet.

Der erste Profilbereich 5 weist ein erstes Profil 7 auf. Der zweite Profilbereich 6 weist ein zweites Profil 8 auf. Das jeweilige Profil 7, 8 umfasst gemäß dem Ausführungsbeispiel ein Profildateisystem 23 und Profilanwendungsprogramme 22. Insbesondere wird eines der Profilanwendungsprogramme 22 nur ausgeführt, falls das zugehörige Profil 7, 8 aktiv ist.

Weiterhin weist das Sicherheitselement 1 gemäß dem Ausführungsbeispiel ein Betriebssystem 9 auf.

Das Sicherheitselement 1 weist gemäß dem Ausführungsbeispiel auch einen Allgemeinsicherheitsbereich 11 auf. Der Allgemeinsicherheitsbereich 11 ist dazu ausgebildet ein allgemeines Anwendungsprogramm 10 aufzunehmen. Gemäß dem Ausführungsbeispiel weist der Allgemeinsicherheitsbereich 11 das Anwendungsprogramm 10 auf. Der Allgemeinsicherheitsbereich 11 ist gemäß dem Ausführungsbeispiel insoweit nicht erfindungsgemäß separat zum Hauptsicherheitsbereich 4 dargestellt.

Der Allgemeinsicherheitsbereich 11 ist dazu ausgebildet zugriffsbereit zu sein, wenn das erste Profil 7 aktiv ist. Der Allgemeinsicherheitsbereich 11 ist aber auch dazu ausgebildet zugriffsbereit zu sein, wenn das zweite Profil 8 aktiv ist. Das allgemeine Anwendungsprogramm 10 kann also während einem Profilwechsel, also beispielsweise beim Wechsel vom ersten Profil 7 zum zweiten Profil 8, durchgehend betrieben werden.

Zudem ist es durch den Allgemeinsicherheitsbereich 11 nur nötig das allgemeine Anwendungsprogramm 10 einmal zu installieren. Ohne den Allgemeinsicherheitsbereich 11, wie dies beispielsweise bei bekannten eUICCs der Fall ist, müsste ein bekanntes Anwendungsprogramm für das erste Profil 7 und nochmal für das zweite Profil 8 installiert werden, so dass das bekannte Anwendungsprogramm nach dem Profilwechsel, im ersten Profilsicherheitsbereich 5 deaktiviert bzw. beendet und nach Unterbrechung im zweiten Profilsicherheitsbereich 6 aktiviert bzw. neu gestartet wird.

Das allgemeine Anwendungsprogramm 10 ist gemäß dem Ausführungsbeispiel als kontaktloser Registrierungsdienst 12 ausgebildet. Eine weitere Form des allgemeine Anwendungsprogramms 10 ist gemäß dem Ausführungsbeispiel als PPSE 13 (Proximity Payment System Environment) ausgebildet. Das PPSE auf dem Sicherheitselement 1 umfasst insbesondere eine Liste aller Anwendungen, die von einer kontaktlosen Schnittstelle des Sicherheitselements 1 bzw. des mobilen Geräts 2 unterstützt werden.

Weiterhin weist das Sicherheitselement 1 gemäß dem Ausführungsbeispiel eine Hauptkontrollinstanz 14 auf, welche Zugangsinformation 15 für den jeweiligen Profilsicherheitsbereich 5, 6 bereitstellt. Die Hauptkontrollinstanz 14 ist insbesondere als ECASD ausgebildet. Von der Hauptkontrollinstanz 14 separiert weist das Sicherheitselement 1 weiterhin gemäß dem Ausführungsbeispiel eine Allgemeinkontrollinstanz 16 auf. Die Allgemeinkontrollinstanz 16 stellt eine Zugangsinformation 17 für den Allgemeinsicherheitsbereich 11 bereit.

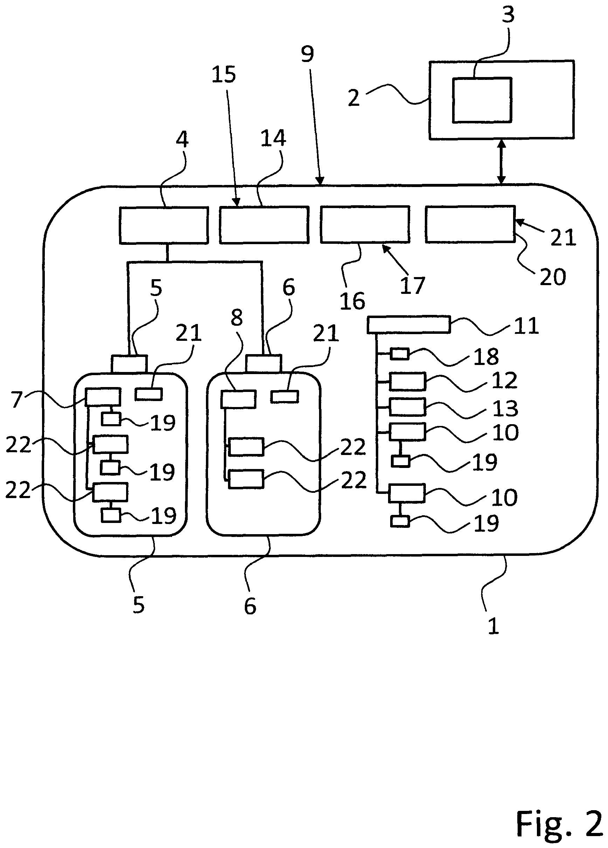

Das Sicherheitselement 1 weist gemäß Fig. 2 einen Zugriffsregel-Anwendungsmaster 18, einen Zugriffsregel-Anwendungsclient 19 und einen Zugriffsregeldateibereich 20 auf. Der Zugriffsregel-Anwendungsmaster 18 ist insbesondere als ARA-M ausgebildet. Der Zugriffsregel-Anwendungsclient 19 ist insbesondere als ARA-C ausgebildet. Der Zugriffsregeldateibereich 20 ist insbesondere als PKCS#15 ausgebildet und weist gemäß dem Ausführungsbeispiel zumindest eine Zugriffsregel 21 für zumindest eines der Profilanwendungsprogramme 22 und/oder das allgemeine Anwendungsprogramm 10 auf. Die Zugriffsregel ist insbesondere als ARF ausgebildet.

Insbesondere ist nur der erste Profilsicherheitsbereich 4 mit dem Zugriffsregel-Anwendungsclient 19 ausgebildet und der zweite Profilsicherheitsbereich 5 ist ohne den Zugriffsregel-Anwendungsclient 19. Die jeweilige Zugriffsregel 21 für eines der Profilanwendungsprogramme 22 des zweiten Profilbereichs wird dann ersatzweise durch den Zugriffsregeldateibereich 20 bereitgestellt. Dadurch kann ein Profilsicherheitsbereich auch ohne Zugriffsregel-Anwendungsclient 19 mit Zugriffsregeln 21 versorgt werden.

Der Zugriffsregeldateibereich 20 kann im jeweiligen Profilbereich 5, 6 und/oder außerhalb des jeweiligen Profilbereichs 5, 6 im Sicherheitselement 1 angeordnet sein.

## Patentansprüche

1. Sicherheitselement (1) für ein mobiles Gerät (2), mit einem Hauptsicherheitsbereich (4), einem ersten Profilsicherheitsbereich (5), welcher dazu eingerichtet ist ein erstes Profil (7) aufzunehmen, und einem von dem ersten Profilsicherheitsbereich (5) separaten zweiten Profilsicherheitsbereich (6), welcher dazu eingerichtet ist ein zweites Profil (8) aufzunehmen, wobei der Hauptsicherheitsbereich (4) dazu ausgebildet ist Verwaltungsfunktionen für die Profilsicherheitsbereiche (5, 6) durchzuführen,
wobei
das Sicherheitselement (1) einen zur Aufnahme eines allgemeinen Anwendungsprogramms (10) eingerichteten Allgemeinsicherheitsbereich (11) aufweist, welcher separat zu den Profilsicherheitsbereichen (5, 6) ausgebildet ist und aktiv ist, wenn der erste Profilsicherheitsbereich (5) aktiv ist und auch wenn der zweite Profilsicherheitsbereich (6) aktiv ist,
**dadurch gekennzeichnet, dass**
der Allgemeinsicherheitsbereich (11) vom Hauptsicherheitsbereich (4) umfasst ist und
das allgemeine Anwendungsprogramm (10) im Hauptsicherheitsbereich (4) ausgeführt wird.

2. Sicherheitselement (1) nach Anspruch 1, wobei
der Allgemeinsicherheitsbereich (11) das allgemeine Anwendungsprogramm (10) aufweist, und das allgemeine Anwendungsprogramm (10) weiterhin aktiv ist, falls ein Profilwechsel durchgeführt wird.

3. Sicherheitselement (1) nach Anspruch 2, wobei
das allgemeine Anwendungsprogramm (10) als kontaktloser Registrierungsdienst ausgebildet ist.

4. Sicherheitselement (1) nach einem der vorhergehenden Ansprüche, wobei das Sicherheitselement (1) eine Hauptkontrollinstanz (14), welche eine jeweilige Zugangsinformation (15) für die Profilsicherheitsbereiche (5, 6) aufweist, und eine Allgemeinkontrollinstanz (16), welche Zugangsinformation (17) für den Allgemeinsicherheitsbereich (11) aufweist, aufweist.

5. Sicherheitselement (1) nach Anspruch 4, wobei
die Allgemeinkontrollinstanz (16) separat zur Hauptkontrollinstanz (14) des Sicherheitselements (1) ausgebildet ist.

6. Sicherheitselement (1) nach einem der Ansprüche 1 bis 5, wobei
die Allgemeinkontrollinstanz (16) von der Hauptkontrollinstanz (14) des Sicherheitselements (1) umfasst ist.

7. Sicherheitselement (1) nach einem der vorhergehenden Ansprüche, wobei das Sicherheitselement (1) einen Zugriffsregel-Anwendungsmaster (18), welcher eine Schnittstelle zum Austausch von Zugriffsregeln (21) für zumindest ein weiteres Anwendungsprogramm (22) des Sicherheitselements (1) mit dem mobilen Gerät (2) aufweist, und der Zugriffsregel-Anwendungsmaster (18) im Allgemeinsicherheitsbereich (11) angeordnet ist.

8. Sicherheitselement (1) nach einem der vorhergehenden Ansprüche, wobei das Sicherheitselement (1) einen außerhalb der Profilsicherheitsbereiche (5, 6) ausgebildeten Zugriffsregeldateibereich (20) aufweist, und zumindest eine Zugriffsregel (21) für ein Profilanwendungsprogramm (22) eines der Profilsicherheitsbereiche (5, 6) in dem Zugriffsregeldateibereich (20) angeordnet ist.

9. Sicherheitselement (1) nach Anspruch 8, wobei
die Zugriffsregel (21) des Profilanwendungsprogramms (22) des jeweiligen Profilsicherheitsbereichs (5, 6) im Zugriffsregeldateibereich (20) angeordnet ist, falls der jeweilige Profilsicherheitsbereich (5, 6) zugriffsregel-anwendungsclientfrei ausgebildet ist.

10. Sicherheitselement (1) nach einem der vorhergehenden Ansprüche, wobei
der erste Profilsicherheitsbereich (5) das erste Profil (7) aufweist und der zweite Profilsicherheitsbereich (6) das zweite Profil (8) aufweist.

## Claims

1. Security element (1) for a mobile device (2), having a main security area (4), a first profile security area (5) that is configured to receive a first profile (7), and a second profile security area (6), separate from the first profile security area (5) and configured to receive a second profile (8), wherein the main security area (4) is designed to perform management functions for the profile security areas (5, 6),
wherein
the security element (1) has a general security area (11) that is configured to receive a general application program (10), is formed separately from the profile security areas (5, 6) and is active when the first profile security area (5) is active and also when the second profile security area (6) is active,
**characterized in that**
the general security area (11) is contained within the main security area (4) and
the general application program (10) is executed in the main security area (4).

2. Security element (1) according to Claim 1, wherein the general security area (11) contains the general application program (10), and the general application program (10) is also active if a profile change is performed.

3. Security element (1) according to Claim 2, wherein the general application program (10) is in the form of a contactless registry service.

4. Security element (1) according to one of the preceding claims, wherein
the security element (1) has a main control instance (14) that has respective access information (15) for the profile security areas (5, 6), and a general control instance (16) that has access information (17) for the general security area (11).

5. Security element (1) according to Claim 4, wherein the general control instance (16) is formed separately from the main control instance (14) of the security element (1).

6. Security element (1) according to one of Claims 1 to 5, wherein
the general control instance (16) is contained within the main control instance (14) of the security element (1).

7. Security element (1) according to one of the preceding claims, wherein
the security element (1) has an access rule application master (18) that has an interface for exchanging access rules (21) for at least one further application program (22) of the security element (1) with the mobile device (2), and the access rule application master (18) is arranged in the general security area (11).

8. Security element (1) according to one of the preceding claims, wherein
the security element (1) has an access rule file area (20) formed outside the profile security areas (5, 6), and at least one access rule (21) for a profile application program (22) of one of the profile security areas (5, 6) is arranged in the access rule file area (20) .

9. Security element (1) according to Claim 8, wherein the access rules (21) of the profile application program (22) of the respective profile security area (5, 6) are arranged in the access rule file area (20) if the respective profile security area (5, 6) is formed so as to be free from any access rule application client.

10. Security element (1) according to one of the preceding claims, wherein
the first profile security area (5) contains the first profile (7) and the second profile security area (6) contains the second profile (8).

## Revendications

1. Elément de sécurité (1) pour un appareil mobile (2), comprenant une zone de sécurité principale (4), une première zone de sécurité de profil (5) qui est conçue pour recevoir un premier profil (7), et une deuxième zone de sécurité de profil (6) séparée de la première zone de sécurité de profil (5) et qui est conçue pour recevoir un deuxième profil (8), dans lequel la zone de sécurité principale (4) est réalisée pour effectuer des fonctions de gestion pour les zones de sécurité de profil (5, 6),
dans lequel l'élément de sécurité (1) présente une zone de sécurité générale (11) aménagée pour recevoir un programme d'application général (10), qui est réalisée séparément des zones de sécurité de profil (5, 6) et est active lorsque la première zone de sécurité de profil (5) est active et également lorsque la deuxième zone de sécurité de profil (6) est active,
**caractérisé en ce que** la zone de sécurité générale (11) est comprise dans la zone de sécurité principale (4), et le programme d'application général (10) est exécuté dans la zone de sécurité principale (4).

2. Elément de sécurité (1) selon la revendication 1, dans lequel la zone de sécurité générale (11) présente le programme d'application général (10), et le programme d'application général (10) est toujours actif si un changement de profil est effectué.

3. Elément de sécurité (1) selon la revendication 2, dans lequel le programme d'application général (10) est réalisé comme un service d'enregistrement sans contact.

4. Elément de sécurité (1) selon l'une quelconque des revendications précédentes, dans lequel l'élément de sécurité (1) présente une instance de contrôle principale (14) qui présente une information d'accès (15) respective pour les zones de sécurité de profil (5, 6), et une instance de contrôle générale (16) qui présente des informations d'accès (17) pour la zone de sécurité générale (11).

5. Elément de sécurité (1) selon la revendication 4, dans lequel l'instance de contrôle générale (16) est réalisée séparément de l'instance de contrôle principale (14) de l'élément de sécurité (1).

6. Elément de sécurité (1) selon l'une quelconque des revendications 1 à 5, dans lequel l'instance de contrôle générale (16) est comprise dans l'instance de contrôle principale (14) de l'élément de sécurité (1).

7. Elément de sécurité (1) selon l'une quelconque des revendications précédentes, dans lequel l'élément de sécurité (1) présente un maître d'application de règle d'accès (18) qui présente une interface pour échanger des règles d'accès (21) pour au moins un programme d'application (22) supplémentaire de l'élément de sécurité (1) avec l'appareil mobile (2), et le maître d'application de règle d'accès (18) est disposé dans la zone de sécurité générale (11).

8. Elément de sécurité (1) selon l'une quelconque des revendications précédentes, dans lequel l'élément de sécurité (1) présente une zone de fichier de règles d'accès (20) réalisée à l'extérieur des zones de sécurité de profil (5, 6), et au moins une règle d'accès (21) pour un programme d'application de profil (22) d'une des zones de sécurité de profil (5, 6) est disposée dans la zone de fichier de règles d'accès (20) .

9. Elément de sécurité (1) selon la revendication 8, dans lequel la règle d'accès (21) du programme d'application de profil (22) de la zone de sécurité de profil (5, 6) respective est disposée dans la zone de fichier de règles d'accès (20) si la zone de sécurité de profil (5, 6) respective est réalisée sans client d'application de règle d'accès.

10. Elément de sécurité (1) selon l'une quelconque des revendications précédentes, dans lequel la première zone de sécurité de profil (5) présente le premier profil (7) et la deuxième zone de sécurité de profil (6) présente le deuxième profil (8).
